# EUROPÄISCHE PATENTANMELDUNG

(11) **EP 1 210 891 A1**
(43) Veröffentlichungstag der Anmeldung: **05.06.2002**
(21) Anmeldenummer: 00126151.0
(22) Anmeldetag: 30.11.2000
(51) Int. Cl.: A47J 31/08, A23F 5/46

(54) **Filterpapiereinsatz zum Herstellen von gefiltertem Kaffee und Verfahren zur Herstellung eines derartigen Filterpapiereinsatzes**

(71) Anmelder: MELITTA HAUSHALTSPRODUKTE GmbH & Co. Kommanditgesellschaft, D-32427 Minden (DE)
(72) Erfinder: Rohde, Florian, 28832 Achim (DE); Heusel, Erik, 32427 Minden (DE); Dölfel, Rainer Dr., 32457 Porta Westfalica (DE)
(74) Vertreter: Dantz, Jan Henning

(57) **Zusammenfassung**

Filterpapiereinsatz (1) zur Herstellung von gefiltertem Kaffee.

Gegenstand der vorliegenden Erfindung ist ein Filterpapiereinsatz (1) zur Herstellung von gefiltertem Kaffee.

Um den Geschmack des erzeugten Filterkaffees verändern zu können, ist der erfindungsgemäße Filterpapiereinsatz (1) mit einer Beschichtung (3) versehen, die aus einem einen Aromaträger bildenden Aromastoff, einem Trägermaterial und einem Lösungsmittel besteht.

Eine derartige Beschichtung (3) kann auf das Filterpapier des Filterpapiereinsatzes (1) aufgesprüht, aufgedruckt oder anderweitig aufgebracht werden und trocknet nach diesem Auftragen relativ schnell aus. Trotzdem sind die Aromastoffe in die Beschichtung (3) eingebunden und werden wieder aktiviert, wenn das heiße Brühwasser zur Herstellung eines Filterkaffees den Filterpapiereinsatz (1) durchtritt.

## Beschreibung

Die vorliegende Erfindung betrifft einen Filterpapiereinsatz zur Herstellung von gefiltertem Kaffee, wobei der Filterpapiereinsatz mit einem Aromaträger zur Veränderung des Kaffee-Geschmackes ausgestattet ist.

Die Erfindung betrifft weiterhin ein Verfahren zur Herstellung eines derartigen Filterpapiereinsatzes. Filterpapiereinsätze der gattungsgemäßen Art sind an sich bekannt.

Die Zugabe von Atomaträgern zur Veränderung des Kaffee-Geschmackes erfolgt bislang vorwiegend dadurch, daß ein entsprechender Filterpapiereinsatz mit einer zusätzlichen Aufnahmekammer versehen und in diese Aufnahmekammer ein pulverförmiges Aroma eingefüllt wird, dessen Geschmacksstoffe sich beim Filtervorgang lösen.

Bekannt ist auch, Filterpapiereinsätze aus einem Filterpapier herzustellen, welches ganzflächig mit einem flüssigen Aromaträger getränkt ist. Derartig hergestellte Filterpapiereinsätze erfordern eine spezielle Verpackung und lassen sich schlecht handhaben.

Außerdem zeigt die DE 40 28 492 A1 Geschmackseinsätze für Kaffeefilter, die innerhalb des Kaffeefilters angeordnet werden.

In dem DE 18 32 952 U wird ein Filterpapier beschrieben, das mit Vitaminen, Spurenelementen oder ähnlichen Ergänzungsstoffen imprägniert ist.

Der vorliegenden Erfindung liegt die Aufgabe zugrunde, einen Filterpapiereinsatz der gattungsgmäßen Art aufzuzeigen, der eine Veränderung des Kaffee-Geschmackes ermöglicht, ohne daß hierfür spezielle Aufnahmekammern geschaffen werden und diese mit Aromaträgern befüllt werden müssen.

Diese Aufgabe wird erfindungsgemäß dadurch gelöst, daß der Aromaträger in einer auf dem Filterpapiereinsatz aufgebrachten, aus einem den Aromaträger bildenden Aromastoff, einem Trägermaterial und einem Lösungsmittel bestehenden Beschichtung eingebunden ist.

Diese erfindungsgemäße Maßnahme ermöglicht es auf einfache Art und Weise, einen Filterpapiereinsatz so zu präparieren, daß eine gewünschte Veränderung des Kaffee-Geschmackes möglich ist, ohne den Filterpapiereinsatz selbst konstruktiv-technisch verändern zu müssen.

Auch bei der Benutzung des erfindungsgemäßen Filterpapiereinsatzes ergibt sich kein Unterschied zu Filterpapiereinsätzen, bei denen eine Geschmacksveränderung des Filterkaffees nicht möglich ist.

Die auf das Filterpapier aufgebrachte Beschichtung, die letztendlich selbstverständlich ausschließlich aus lebensmittelunbedenklichen Komponenten besteht, kann im flüssigen Zustand auf ein Filterpapier aufgebracht werden und trocknet anschließend schnell aus, so daß ohne Verlust der Wirkstoffe des Aromaträgers selbst der Filterpapiereinsatz wie ein unbehandelter Filterpapiereinsatz benutzt und gehandhabt werden kann.

Nach einem weiteren Gedanken der Erfindung besteht das Trägermaterial aus Stärke, vorzugsweise aus modifizierter Stärke.

Dies bringt den Vorteil mit sich, daß die Filtrationseigenschaften des Filterpapiereinsatzes praktisch erhalten bleiben, da sich das besagte Trägermaterial aus Stärke, vorzugsweise aus modifizierter Stärke, beim Filtervorgang durch das Brühwasser wieder löst, so daß die Durchlaufgeschwindigkeit des Brühwassers und damit die Filtrationseigenschaften des Filterpapiereinsatzes praktisch unverändert erhalten bleiben im Vergleich zu einem unbehandelten Filterpapiereinsatz.

Die Beschichtung kann beliebig vollflächig auf das Filterpapier des Filterpapiereinsatzes aufgetragen sein, ebenso ist es möglich, eine Beschichtung nur abschnittsweise vorzunehmen.

Die Beschichtung kann in ihrem flüssigen Zustand auf das Filterpapier aufgesprüht, aufgedruckt oder in anderer, zweckmäßiger Weise auf das Filterpapier aufgebracht werden, so daß die Herstellung eines erfindungsgemäßen Filterpapiereinsatzes mit dem gewünschten Zusatznutzen letztlich in der gleichen Geschwindigkeit möglich ist wie die Herstellung eines unbehandelten Filterpapiereinsatzes.

Insbesondere bei einem tütenartigen Filterpapiereinsatz mit zwei übereinander liegenden Filterpapier-Lagen, die durch Prägenähte miteinander verbunden sind, ist es vorteilhaft, die Beschichtung auf einen fertigen Filterpapiereinsatz aufzubringen.

Deren Vorteil liegt insbesondere darin, daß die Festigkeit der Prägenähte derjenigen von unbehandelten Filterpapiereinsätzen entspricht und außerdem wird immer nur soviel Beschichtungsmaterial verbraucht, wie für die Beschichtung eines fertigen Filterpapiereinsatzes nötig ist.

Ein Verfahren zur Herstellung eines erfindungsgemäßen Filterpapiereinsatzes ist dadurch gekennzeichnet, daß zunächst aus Stärke, vorzugsweise aus modifizierter Stärke, ein Lösungsmittel und aus Aromastoffen eine Emulsion hergestellt und diese anschließend auf das zur Herstellung eines Filterpapiereinsatzes verwendete Filterpapier oder auf einen fertiggestellten Filterpapiereinsatz aufgebracht wird.

Dabei wird die Verwendung einer Emulsion bevorzugt, die folgende Bestandteile enthält:
Naturidentische, künstliche oder natürliche Aromastoffe oder ein Gemisch aus Aromastoffen der genannten Kategorien,
1,2-Propandiol,
entmineralisiertes Wasser,
modifizierte Stärke mit emulgierenden und verkapsenden Eigenschaften, z. B. E1450.

Bevorzugt wird die Emulsion auf einen fertigen Filterpapiereinsatz aufgesprüht oder aufgedruckt.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: eine Ansicht eines in seiner Formgebung bekannten, kegelstumpfartigen Filterpapiereinsatzes gemäß vorliegender Erfindung,
- Figur 2: eine Draufsicht auf einen Filterpapiereinsatz gemäß vorliegender Erfindung nach Art eines Rundfilter-Blattes,
- Figur 3: einen schematisch dargestellten Querschnittsbereich eines Filterpapieres für einen Filterpapiereinsatz gemäß den Figuren 1 oder 2,
- Figur 4: einen kegelstumpfartigen Filterpapiereinsatz nach einem weiteren Ausführungsbeispiel der Erfindung mit teilweise aufgebrochener Seitenwand.

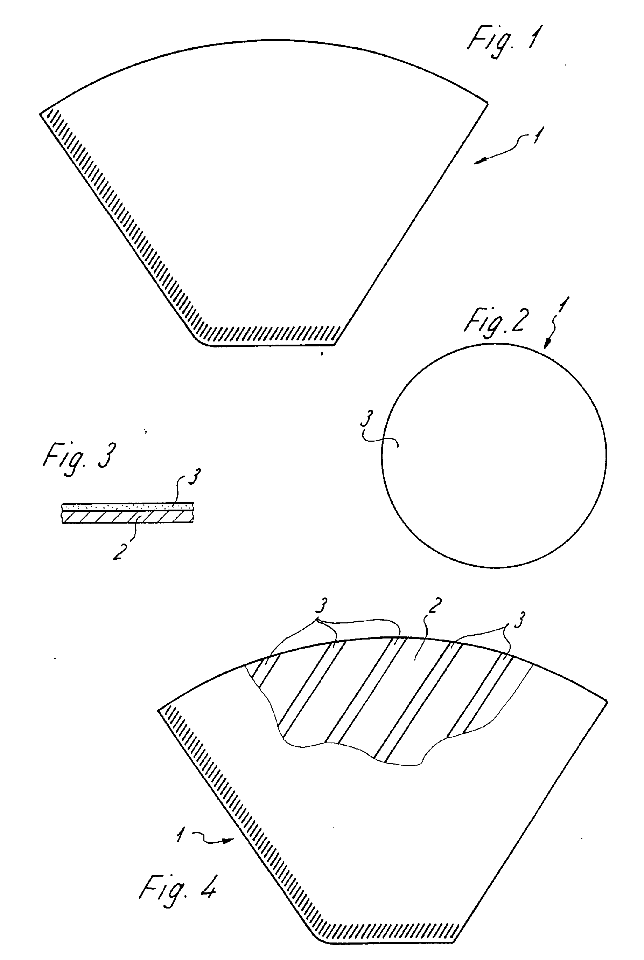

In den Figuren 1, 2 und 4 sind beispielhaft Filterpapiereinsätze 1 in an sich bekannter geometrischer Form dargestellt.

Die Filterpapiereinsätze 1 nach den Figuren 1 und 4 sind jeweils doppellagig ausgeführt und weisen einen im wesentlichen kegelstumpfartigen Grundriß auf.

Derartige tütenartige Filterpapiereinsätze sind die am meisten bekannten und verwendeten Filterpapiereinsätze, aber auch Filterpapiereinsätze 1 gemäß Figur 2 in Form eines Rundfilter-Blattes werden häufig verwendet.

Unabhängig von der geometrischen Form des Filterpapiereinsatzes 1 ist deren Besonderheit gemäß vorliegender Erfindung darin zu sehen, daß das zu ihrer Herstellung verwendete Filterpapier 2 (siehe Figur 3) mit einer Beschichtung 3 versehen ist, die im wesentlichen aus einem einen Aromaträger bildenden Aromastoff, einem Trägermaterial und einem Lösungsmittel besteht.

Diese Beschichtung 3 kann ganzflächig auf das Filterpapier 2 aufgetragen sein oder, wie Figur 4 anschaulich zeigt, auch nur bereichsweise auf das Filterpapier 3 aufgebracht sein. Die Beschichtung 3 trocknet nach dem Auftragen auf das Filterpapier 2 in relativ kurzer Zeit aus, so daß der fertige Filterpapiereinsatz 1 gehandhabt und benutzt werden kann wie ein unbehandelter Filterpapiereinsatz. Dennoch sind die Aromastoffe in der Beschichtung 3 eingebunden und diese Aromastoffe lösen sich bei der Herstellung eines Filterkaffees durch das durchlaufende, erhitzte Brühwasser und tragen dann zu einer Veränderung des Kaffee-Geschmacks bei.

Als Trägermaterial für die Beschichtung 3 wird vorteilhafterweise eine Stärke, vorzugsweise eine modifizierte Stärke, verwendet.

Als Lösungsmittel wird Wasser, vorzugsweise entmineralisiertes Wasser, Alkohol oder eine Mischung aus Wasser und Alkohol verwendet.

Als Aromastoffe können natürliche, künstliche oder naturidentische Aromastoffe oder eine Mischung aus Aromastoffen der genannten Kategorien Verwendung finden.

Die Beschichtung 3 kann ganzflächig oder bereichsweise auf dem Filterpapiereinsatz 1 aufgebracht sein.

Ebenso ist es möglich, die Beschichtung 3 auf der - in Durchflußrichtung des Brühwassers gesehen - oberen Seite des Filterpapiereinsatzes 1 aufgebracht sein wie auch auf dessen bei gleicher Betrachtungsweise unteren Seite.

Das Aufbringen der Beschichtung 3 ist sowohl im Druckverfahren wie auch durch Aufsprühen möglich, wobei letztere Methode besonders sinnvoll ist, wenn die Beschichtung auf einen fertiggestellten Filterpapiereinsatz 1 aufzubringen ist.

Die Beschichtung kann dabei ganzflächig oder bereichsweise aufgebracht werden, wobei die Möglichkeit besteht, eine Aromakonzentrationsabstufung vorzusehen. Bei einer Aromakonzentrationsabstufung sollte die Aromakonzentration zur Unterseite des Filterpapiereinsatzes 1 hin zunehmend sein.

Als Aromaträger kann die Beschichtung 3 sowohl ein flüssiges Aroma wie auch ein pulverförmiges Aroma beinhalten.

Verfahrensmäßig erfolgt die Herstellung eines Filterpapiereinsatzes gemäß vorliegender Erfindung derart, daß zunächst aus Stärke, vorzugsweise modifizierter Stärke, einem Lösungsmittel und aus Aromastoffen eine Emulsion hergestellt und diese anschließend auf das zur Herstellung eines Filterpapiereinsatzes 1 verwendete Filterpapier oder auf einen fertigggestellten Filterpapiereinsatz 1 aufgebracht wird.

Dabei wird eine Emulsion bevorzugt, die im wesentlichen folgende Bestandteile enthält:
Naturidentische, künstliche oder natürliche Aromastoffe oder ein Gemisch aus Aromastoffen der genannten Kategorien,
1,2-Propendiol,
entmineralisiertes Wasser,
modifizierte Stärke mit emulgierenden und verkapselnden Eingenschaften, z. B. E1450.

Besonders wirtschaftliche ist es, wenn die Emulsion auf einen fertigen Filterpapiereinsatz 1 aufgesprüht oder aufgedruckt wird.

Der Filterpapiereinsatz 1 kann vor dem Aufsprühen oder Aufdrucken der Emulsion in herkömmlicher Weise optimal gefertigt werden und durch das anschließende Aufbringen der Beschichtung auf den fertigen Filterpapiereinsatz 1 wird lediglich soviel Emulsion verbraucht, wie für die ganzflächige oder teilweise Beschichtung des Filterpapiereinsatzes 1 benötigt wird.

Sofern der Filterpapiereinsatz nur bereichsweise mit einer Beschichtung versehen wird, ist es vorteilhaft, die nicht beschichteten Bereiche während des Aufbringens der Beschichtung mit Wasser zu befeuchten, um eine wellen- oder Faltenbildung des Filterpapieres zu vermeiden.

Es ist bei der Handhabung eines Filterpapiereinsatzes gegebenenfalls sinnvoll, den oberen Randbereich, der beim Handhaben des Filterpapiereinsatzes 1 üblicherweise erfaßt wird, beschichtungsfrei zu belassen.

## Patentansprüche

1. Filterpapiereinsatz zur Herstellung von gefiltertem Kaffee, wobei der Filterpapiereinsatz mit einem Aromaträger zur Veränderung des Kaffee-Geschmacks ausgestattet ist, **dadurch gekennzeichnet, daß** der Aromaträger in einer auf dem Filterpapiereinsatz (1) aufgebrachten, aus einem den Aromaträger bildenden Aromastoff, einem Trägermaterial und einem Lösungsmittel bestehenden Beschichtung (3) eingebunden ist.

2. Filterpapiereinsatz nach Anspruch 1, **dadurch gekennzeichnet, daß** das Trägermaterial aus Stärke, vorzugsweise aus modifizierter Stärke, besteht.

3. Filterpapiereinsatz nach Anspruch 1 oder 2, **dadurch gekennzeichnet, daß** das Lösungsmittel aus Wasser, vorzugsweise entmineralisiertem Wasser, Alkohol oder aus einer Mischung aus Wasser und Alkohol besteht.

4. Filterpapiereinsatz nach einem oder mehreren der Ansprüche 1-3, **dadurch gekennzeichnet, daß** als Aromastoff ein natürlicher, künstlicher oder naturidentischer Aromastoff oder eine Mischung aus den genannten Kategorien bestehender Aromastoff verwendet ist.

5. Filterpapiereinsatz nach einem oder mehreren der vorhergehenden Ansprüche, **dadurch gekennzeichnet, daß** die Beschichtung (3) ganzflächig auf den Filterpapiereinsatz (1) aufgebracht ist.

6. Filterpapiereinsatz nach einem oder mehreren der Ansprüche 1-4, **dadurch gekennzeichnet, daß** die Beschichtung (3) bereichsweise auf dem Filterpapiereinsatz (1) aufgebracht ist.

7. Filterpapiereinsatz nach einem oder mehreren der vorhergehenden Ansprüche 1-6, **dadurch gekennzeichnet, daß** die Beschichtung (3) auf der - in Durchflußrichtung des Brühwassers gesehen - oberen Seite des Filterpapiereinsatzes (1) aufgebracht ist.

8. Filterpapiereinsatz nach einem oder mehreren der Ansprüche 1-6, **dadurch gekennzeichnet, daß** die Beschichtung (3) auf der - in Durchflußrichtung des Brühwassers gesehen - unteren Seite des Filterpapiereinsatzes (1) aufgebracht ist.

9. Filterpapiereinsatz nach einem oder mehreren der Ansprüche 1-8, **dadurch gekennzeichnet, daß** die Beschichtung (3) im Druck- oder Preßverfahren aufgebracht ist.

10. Filterpapiereinsatz nach einem oder mehreren der Ansprüche 1-8, **dadurch gekennzeichnet, daß** die Beschichtung (3) auf den Filterpapiereinsatz (1) aufgesprüht ist.

11. Filterpapiereinsatz nach einem oder mehreren der Ansprüche 1-10, **dadurch gekennzeichnet, daß** der Aromastoff aus einem flüssigen Aroma besteht.

12. Filterpapiereinsatz nach einem oder mehreren der Ansprüche 1-10, **dadurch gekennzeichnet, daß** der Aromastoff aus einem pulverförmigen Aroma besteht.

13. Verfahren zur Herstellung eines Filterpapiereinsatzes (1) nach Anspruch 1, **dadurch gekennzeichnet, daß** zunächst aus Stärke, vorzugsweise modifizierter Stärke, einem Lösungsmittel und aus Aromastoffen eine Emulsion hergestellt und diese anschließend auf das zur Herstellung eines Filterpapiereinsatzes (1) verwendete Filterpapier oder auf einen fertiggestellten Filterpapiereinsatz (1) aufgebracht wird.

14. Verfahren nach Anspruch 13, **dadurch gekennzeichnet, daß** die Aromastoffe mit einem Lösungsmittel gemischt, eine Stärke, vorzugsweise eine modifizierte Stärke, in entmineralisiertes Wasser eingerührt und das Aromastoff/Lösungsmittel-Gemisch mit dem Stärke/Wasser-Gemisch emulgiert wird.

15. Verfahren nach Anspruch 13 oder 14, **dadurch gekennzeichnet, daß** die Emulsion folgende Bestandteile enthält:
naturidentische, künstliche oder naturidentische Aromastoffe oder ein Gemisch aus Aromastoffen der genannten Kategorien,
1,2 Propandiol
entmineralisiertes Wasser,
modifizierte Stärke mit emulgierenden und verkapselnden Eigenschaften, z. B. E1450.

16. Verfahren nachnach einem oder mehreren der Ansprüche 13-15, **dadurch gekennzeichnet, daß** die Emulsion auf einen fertigen Filterpapiereinsatz (1) aufgesprüht wird.

17. Verfahren nach einem oder mehreren der Ansprüche 13-15, **dadurch gekennzeichnet, daß** die Emulsion auf einen fertigen Filterpapiereinsatz (1) aufgedruckt wird.

18. Verfahren nach einem oder mehreren der Ansprüche 13-17, **dadurch gekennzeichnet, daß** die Beschichtung (3) in Aromakonzentrationsabstufungen auf den Filterpapiereinsatz (1) aufgebracht wird.

19. Verfahren nach Anspruch 18, **dadurch gekennzeichnet, daß** die Aromakonzentration zur Unterseite des Filterpapiereinsatzes (1) hin gesehen ansteigend ist.

20. Verfahren nach einem oder mehreren der Ansprüche 13-19, **dadurch gekennzeichnet, daß** die Beschichtung (3) bereichsweise auf den Filterpapiereinsatz (1) aufgebracht und die nicht beschichteten übrigen Bereiche während des Beschichtungsvorganges mit Wasser befeuchtet werden.
